(19) Europäisches Patentamt
European Patent Office
Office européen des brevets

(11) **EP 4 692 189 A1**

(12) **EUROPEAN PATENT APPLICATION**
published in accordance with Art. 153(4) EPC

(43) Date of publication:
**11.02.2026  Bulletin 2026/07**

(21) Application number: **24780596.3**

(22) Date of filing: **28.03.2024**

(51) International Patent Classification (IPC):
*C08J 9/16* (2006.01)

(52) Cooperative Patent Classification (CPC):
**C08J 9/16**

(86) International application number:
**PCT/JP2024/012567**

(87) International publication number:
**WO 2024/204495 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023  JP 2023056681**

(71) Applicant: **Kaneka Corporation
Osaka-shi, Osaka 530-8288 (JP)**

(72) Inventor: **MATSUMIYA, Yutaka
Settsu-shi, Osaka 566-0072 (JP)**

(74) Representative: **Vossius & Partner
Patentanwälte Rechtsanwälte mbB
Siebertstraße 3
81675 München (DE)**

(54) **METHOD FOR PRODUCING POLYPROPYLENE RESIN FOAM MOLDED BODY**

(57)    An object is to provide a polypropylene-based resin in-mold expanded product having excellent sound absorbing performance and having a small amount of deformation. Provided is a method for producing a polypropylene-based resin in-mold expanded product, the method including: a step of heating, in a mold, polypropylene-based resin expanded particles to which an internal pressure is not applied; and a water cooling step of carrying out water cooling by spraying water on a pre-polypropylene-based resin in-mold expanded product or both the pre-polypropylene-based resin in-mold expanded product and the mold for a specific time. The porosity of the polypropylene-based resin in-mold expanded product is not less than 25%.

FIG. 1

**Description**

Technical Field

The present invention relates to a method for producing a polypropylene-based resin in-mold expanded product.

Background Art

Polypropylene-based resin in-mold expanded products are used in a wide variety of applications such as shock-absorbing packing materials, shipping materials (e.g., returnable containers and shock-absorbing materials for transport by truck), heat insulating materials, civil engineering and construction materials, and automotive components (e.g., tool boxes and floor core materials) (e.g., Patent Literature 1).
For automotive interior materials, expanded materials having sound absorbing performance are required. As a polypropylene-based resin in-mold expanded product having sound absorbing performance, the technique disclosed in Patent Literature 2 is, for example, known.

Citation List

[Patent Literature]

[Patent Literature 1]
Japanese Patent Application Publication Tokukai No. 2001-198940
[Patent Literature 2]
Japanese Patent Application Publication Tokukai No. 2007-45979

Summary of Invention

Technical Problem

Polypropylene-based resin in-mold expanded products sometimes deform (e.g., contract) after being produced, and thus polypropylene-based resin in-mold expanded products which have small amounts of deformation after being produced have been required.
The object of an embodiment of the present invention is to provide a polypropylene-based resin in-mold expanded product having excellent sound absorbing performance and a small amount of deformation.

Solution to Problem

As a result of conducting diligent studies in order to attain the above object, the inventors of the present invention completed the present invention.
That is, a method for producing a polypropylene-based resin in-mold expanded product in accordance with an embodiment of the present invention includes: a heating step of heating, in a mold, polypropylene-based resin expanded particles to which an internal pressure is not applied; and a water cooling step of water-cooling a pre-polypropylene-based resin in-mold expanded product obtained in the heating step, by spraying water on the pre-polypropylene-based resin in-mold expanded product or both the pre-polypropylene-based resin in-mold expanded product and the mold for not shorter than 1 second, wherein a porosity of the polypropylene-based resin in-mold expanded product is not less than 25%.

Advantageous Effects of Invention

An embodiment of the present invention has the effect of making it possible to provide a polypropylene-based resin in-mold expanded product having excellent sound absorbing performance and a small amount of deformation.

Brief Description of Drawings

Fig. 1 is a schematic view of a polypropylene-based resin in-mold expanded product 100 used to evaluate the amount of deformation.

Fig. 2 is a view of a discharge hole whose cross-sectional shape is a star shape, as viewed from the front.

Fig. 3 is a view of a star-shaped polypropylene-based resin particle, as viewed from a certain direction.

Fig. 4 is a view of star-shaped polypropylene-based resin expanded particles, as viewed from a certain direction.

Fig. 5 is a view of a discharge hole whose cross-sectional shape differs from that of the discharge hole illustrated in Fig. 2 and whose cross-sectional shape is an anchor cross shape, as viewed from the front.

Fig. 6 is a view of a discharge hole whose cross-sectional shape differs from those of the discharge holes illustrated in Figs. 2 and 5, as viewed from the front.

Description of Embodiments

The following description will discuss embodiments of the present invention. However, the present invention is not limited to the embodiments. The present invention is not limited to the configurations described below, and can be altered in various ways within the scope of the claims. The present invention also encompasses, in its technical scope, any embodiment or example derived by combining technical means disclosed in differing embodiments or examples. Further, it is possible to form a new technical feature by combining technical means disclosed in any embodiments. All academic and patent documents cited in the present specification are incorporated herein by reference. Any numerical range expressed as "A to B" in the present specification is intended to mean "not less than A and not more than B (i.e., a range from A to B which includes both A and B)" unless otherwise stated.

In the present specification, a "structural unit derived from an X monomer" contained in a polymer, a copolymer, or a resin may be referred to as an "X unit".

A copolymer containing, as structural units, an $X^1$ unit, an $X^2$ unit, ..., and an $X^n$ unit (where n is an integer of 2 or more) is also referred to as an "$X^1/X^2/.../X^n$ copolymer", unless otherwise stated in the present specification. The $X^1/X^2/.../X^n$ copolymer is not limited to any particular polymerization form, unless otherwise explicitly stated, and may be a random copolymer, an alternating copolymer, a block copolymer, or a graft copolymer.

The expression "$C_{n-m}$" regarding a functional group and a compound is intended to mean that the number of carbon atoms contained in the functional group and the compound is n to m, unless otherwise stated in the present specification.

[1. Technical idea on an embodiment of the present invention]

The inventor of the present invention conducted diligent studies in order to provide a polypropylene-based resin in-mold expanded product having excellent sound absorbing performance and a small amount of deformation. In so doing, the inventor of the present invention newly found it possible to obtain an in-mold expanded product having excellent sound absorbing performance, by molding expanded particles to which an internal pressure is not applied.

Conventionally, in a case where a polypropylene-based resin in-mold expanded product is produced, the technique of molding polypropylene-based resin expanded particles to which an internal pressure is applied has been common, as disclosed in Patent Literatures 1 and 2.

However, the inventor of the present invention newly found a problem that, in a case where expanded particles to which an internal pressure is not applied are molded, an in-mold expanded product may have a large amount of deformation.

Under the circumstances, the inventor of the present invention further conducted diligent studies in order to provide an in-mold expanded product having a small amount of deformation, even in a case where expanded particles to which an internal pressure is not applied are molded. As a result, the inventor of the present invention obtained surprising new findings that, when producing an in-mold expanded product having a certain or more porosity with use of expanded particles to which an internal pressure is not applied, it is possible to obtain a polypropylene-based resin in-mold expanded product having a small amount of deformation, by including a step of spraying water on the in-mold expanded product or both the polypropylene-based resin in-mold expanded product and a mold for not shorter than 1 second.

That is, the inventor of the present invention obtained surprising new findings that it is possible to provide a polypropylene-based resin in-mold expanded product having excellent sound absorbing performance and a small amount of deformation, by using a method which is for producing a polypropylene-based resin in-mold expanded product and which has the following configuration, and consequently completed the present invention: a method for producing a polypropylene-based resin in-mold expanded product, the method including: a heating step of heating, in a mold, polypropylene-based resin expanded particles to which an internal pressure is not applied; and a water cooling step of water-cooling a pre-polypropylene-based resin in-mold expanded product obtained in the heating step, by spraying water on the pre-polypropylene-based resin in-mold expanded product or both the pre-polypropylene-based resin in-mold expanded product and the mold for not shorter than 1 second, wherein a porosity of the polypropylene-based resin in-mold expanded product is not less than 25%.

Before the method for producing a polypropylene-based resin in-mold expanded product of an embodiment of the present invention (hereinafter may be referred to as "the present production method") is detailed, the polypropylene-based resin expanded particles which are used in the present production method and polypropylene-based resin particles which are a raw material (material) of the polypropylene-based resin expanded particles are detailed.

In the present specification, the "polypropylene-based resin particles" may be referred to as "resin particles", the "polypropylene-based expanded particles" may be referred to as "expanded particles", and the "polypropylene-based in-mold expanded product" may be referred to as an "in-mold expanded product". In the present specification, the "resin particles in accordance with an embodiment of the present invention" may be referred to as "the present resin particles", and the "expanded particles in accordance with an embodiment of the present invention" may be referred to as "the present expanded particles". The "polypropylene-based in-mold expanded product in accordance with an embodiment of the present invention" may be referred to as "the present in-mold expanded product", and the "method for producing a polypropylene-based resin in-mold expanded product in accordance with an embodiment of the present invention" may be referred to as "the present production method".

[2. Polypropylene-based resin particles]

In the present specification, polypropylene-based resin particles are intended to mean resin particles including a polypropylene-based resin. In other words, the polypropylene-based resin particles includes a polypropylene-based resin as a resin component.

The following description will discuss, in detail, raw materials (materials) included in the polypropylene-based resin particles.

<Polypropylene-based resin>

In the present specification, the "polypropylene-based resin" is intended to mean a resin containing a propylene unit in an amount of not less than 50 mol%, with respect to 100 mol% of all structural units constituting the resin.

The polypropylene-based resin may be (i) a homopolymer of propylene, (ii) a block copolymer, an impact copolymer, an alternating copolymer, a random copolymer, or a graft copolymer of propylene and a monomer other than propylene, or (iii) a mixture of at least two of these copolymers.

The polypropylene-based resin preferably contains a propylene unit in an amount of not less than 75 mol%, with respect to 100 mol% of all structural units constituting the polypropylene-based resin.

The polypropylene-based resin preferably contains at least one selected from the group consisting of (i) a homopolymer of propylene, (ii) a block copolymer of propylene and a monomer other than propylene, and (iii) a random copolymer of propylene and a monomer other than propylene, and is more preferably constituted only by at least one selected from the group.

The polypropylene-based resin is preferably a random copolymer of propylene and a monomer other than propylene, because the random copolymer has the advantage that it is possible to process the resin particles and expanded particles at a low heating temperature when the resin particles are expanded and the expanded particles are molded.

In addition to the propylene unit, the polypropylene-based resin may have one or more units of structural units derived from a monomer(s) other than a propylene monomer or may have one or more types of structural units derived from monomers other than a propylene monomer. The "monomer(s) other than a propylene monomer" used in production of the polypropylene-based resin may be referred to as a "comonomer(s)". The "structural units derived from a monomer(s) other than a propylene monomer" contained in the polypropylene-based resin may be each referred to as a "comonomer unit".

Examples of such a comonomer(s) include $\alpha$-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene.

Specific examples of the polypropylene-based resin include a polypropylene homopolymer, an ethylene/propylene random copolymer, a 1-butene/propylene random copolymer, a 1-butene/ethylene/propylene random copolymer, an ethylene/propylene block copolymer, a 1-butene/propylene block copolymer, a propylene/chlorinated vinyl copolymer, a propylene/maleic anhydride copolymer, and a styrenemodified polypropylene-based resin.

As the polypropylene-based resin, one of the above specific examples may be used alone, or two or more of the above specific examples may be used in combination. Among the above specific examples, an ethylene/propylene random copolymer and/or a 1-butene/ethylene/propylene random copolymer is/are preferable as the polypropylene-based resin in that the resin particles have good expandability and the expanded particles have good moldability.

A case where an ethylene/propylene random copolymer or a 1-butene/ethylene/propylene random copolymer is used as the polypropylene-based resin (hereinafter "Case A") is considered. In Case A, the ethylene content of the ethylene/propylene random copolymer or the 1-butene/ethylene/propylene random copolymer is not particularly limited, but is preferably 0.2% by weight to 10.0% by weight, more preferably 0.3% by weight to 5.0% by weight, and even more preferably 0.4% by weight to 2.5% by weight, with respect to 100% by weight of each copolymer. The ethylene content of the copolymer is intended to mean the amount (% by weight) of an ethylene unit included in 100% by weight of all structural units constituting the copolymer. In a case where the ethylene content of the ethylene/propylene random copolymer or the 1-butene/ethylene/propylene random copolymer is not less than 0.2% by weight, the resin particles tend to have good expandability and/or the expanded particles tend to have good moldability. In a case where the ethylene content is not more than 10.0% by weight, the mechanical properties of an in-mold expanded product are unlikely to deteriorate.

In Case A, the 1-butene content of the 1-butene/ethylene/propylene random copolymer is not particularly limited, but is preferably 0.2% by weight to 10.0% by weight, more preferably 1.0% by weight to 8.0% by weight, even more preferably 2.0% by weight to 6.0% by weight, and particularly preferably 3.0% by weight to 5.0% by weight, with respect to 100% by weight of the copolymer. The 1-butene content of the copolymer is intended to mean the amount (% by weight) of a 1-butene unit included in 100% by weight of all structural units constituting the copolymer. In a case where the 1-butene content of the 1-butene/ethylene/propylene random copolymer is not less than 0.2% by weight, the resin particles tend to have good expandability and/or the expanded particles tend to have good moldability. In a case where the 1-butene content is not more than 10.0% by weight, the mechanical properties of the in-mold expanded product are unlikely to deteriorate.

In Case A, the total amount of the ethylene unit and the 1-butene unit contained in the 1-butene/ethylene/propylene random copolymer is not particularly limited, but is preferably 0.5% by weight to 10.0% by weight, more preferably 1.0% by weight to 8.0% by weight, even more preferably 2.0% by weight to 6.0% by weight, and particularly preferably 3.0% by weight to 5.0% by weight, with respect to 100% by weight of the 1-butene/ethylene/propylene random copolymer. In a case where the total amount of the ethylene unit and the 1-butene unit contained in the 1-butene/ethylene/propylene random copolymer is not less than 0.5% by weight, the resin particles tend to have good expandability and/or the expanded particles tend to have good moldability. In a case where the total amount of the ethylene unit and the 1-butene unit is not more than 10.0% by weight, the mechanical properties of the in-mold expanded product are unlikely to deteriorate.

The melting point of the polypropylene-based resin is not particularly limited, but is preferably 135°C to 160°C, more preferably 138°C to 158°C, more preferably 140°C to 156°C, more preferably 143°C to 154°C, even more preferably 145°C to 152°C, and particularly preferably 148°C to 150°C. In a case where the melting point of the polypropylene-based resin is not lower than 135°C, it is possible to obtain an in-mold expanded product having excellent heat resistance. In a case where the melting point is not higher than 160°C, it is easy to increase the expansion rate of the expanded particles in production of the expanded particles. Moreover, the polypropylene-based resin having a melting point falling within the above range has the advantage that it is possible to obtain a polypropylene-based resin in-mold expanded product having excellent sound absorbing performance and a small amount of deformation. Note that a method for measuring the melting point of the polypropylene-based resin will be detailed in Examples described later.

The melt index (MI) of the polypropylene-based resin is preferably 3.0 g/10 minutes to 30.0 g/10 minutes, more preferably 4.0 g/10 minutes to 20.0 g/10 minutes, more preferably 5.0 g/10 minutes to 15.0 g/10 minutes, even more preferably 7.0 g/10 minutes to 13.0 g/10 minutes, and particularly preferably 8.5 g/10 minutes to 12.0 g/10 minutes, at 230°C (230±0.2°C). Note that the MI may also be referred to as a "melt flow rate (MFR)". This configuration has the advantage that it is possible to obtain a polypropylene-based resin in-mold expanded product having excellent sound absorbing performance and a small amount of deformation. Note that a method for measuring the MI of the polypropylene-based resin will be detailed in Examples described later.

The polypropylene-based resin can be obtained by a known method. A polymerization catalyst used in synthesis of the polypropylene-based resin is not particularly limited, and, for example, a Ziegler catalyst, a metallocene catalyst, or the like can be used.

The resin component included in the polypropylene-based resin particles preferably includes the polypropylene-based resin in an amount of preferably not less than 50% by weight, more preferably not less than 60% by weight, more preferably not less than 70% by weight, more preferably not less than 80% by weight, even more preferably not less than 90% by weight, and even more preferably not less than 95% by weight, with respect to 100% by weight of the resin component. The resin component included in the polypropylene-based resin particles may include the polypropylene-based resin in an amount of 100% by weight with respect to 100% by weight of the resin component. In other words, the resin component included in the polypropylene-based resin particles may be constituted only by the polypropylene-based resin.

The resin component included in the polypropylene-based resin particles preferably includes at least one selected from the group consisting of the ethylene/propylene random copolymer and the 1-butene/ethylene/propylene random copolymer in a total amount of preferably not less than 50% by weight, more preferably not less than 60% by weight, more preferably not less than 70% by weight, more preferably not less than 80% by weight, even more preferably not less than 90% by weight, and even more preferably not less than 95% by weight, with respect to 100% by weight of the resin component. The resin component included in the polypropylene-based resin particles may include at least one selected from the group consisting of the ethylene/propylene random copolymer and the 1-butene/ethylene/propylene random copolymer in a total amount of 100% by weight, with respect to 100% by weight of the resin component. In other words, the resin component included in the polypropylene-based resin particles may be constituted only by at least one selected from the group consisting of the ethylene/propylene random copolymer and the 1-butene/ethylene/propylene random copolymer.

<Another resin etc.>

The resin particles may further include a resin other than the polypropylene-based resin (hereinafter may be referred to as "another resin etc.") as the resin component, provided that the effect of an embodiment of the present invention is not impaired. Examples of the another resin etc. include: (a) ethylene-based resins such as high-density polyethylene, medium-density polyethylene, low-density polyethylene, linear low-density polyethylene, linear very-low-density polyethylene, an ethylene/vinyl acetate copolymer, an ethylene/acrylic acid copolymer, and an ethylene/-methacrylic acid copolymer; (b) polyphenylene ether-based resins such as polyphenylene ether and modified polyphenylene ether; (c) polyolefin-based waxes such as propylene/α-olefin-based wax; (d) olefin-based rubbers such as ethylene/propylene rubber, ethylene/butene rubber, ethylene/hexene rubber, and ethylene/octene rubber; and (e) polystyrene-based resins and hydrogenated styrene-based copolymers. Note that polyphenylene ether-based resins are amorphous resins.

In a case where the resin particles include another resin etc., the amount of the another resin etc. included in the resin particles is, for example, 0.1 parts by weight to 20.0 parts by weight, more preferably 0.5 parts by weight to 15.0 parts by weight, even more preferably 1.0 part by weight to 10.0 parts by weight, and still more preferably 3.0 parts by weight to 8.0 parts by weight, with respect to 100 parts by weight of the polypropylene-based resin. The another resin etc. included in an amount falling within the above range has the advantage that the resin particles tend to have good expandability and/or the expanded particles tend to have good moldability.

<Additive>

The resin particles may include an additive, as needed, in addition to the polypropylene-based resin. Examples of the additive include a coloring agent, a hydrophilic compound, a crystal nucleating agent, an antistatic agent, a flame retardant, an antioxidant, a photo stabilizer, an electrically conductive agent, and a lubricant. Such an additive may be included in the resin particles, or may be added directly to a dispersion slurry when the resin particles are expanded.

The hydrophilic compound is a substance used in order to increase the amount of water impregnated into the resin particles. The hydrophilic compound is capable of imparting expandability to the resin particles. The effect of imparting expandability to the resin particles which effect is brought about by the hydrophilic compound becomes particularly remarkable in a case where water is used as a blowing agent.

<Physical properties of polypropylene-based resin particles>

(Particle weight of resin particles)

The weight per particle (particle weight) of the present resin particles is not particularly limited, but is preferably 0.50 mg/particle to 6.0 mg/particle, more preferably 1.0 mg/particle to 5.0 mg/particle, even more preferably 1.5 mg/particle to 4.0 mg/particle, and particularly preferably 1.8 mg/particle to 3.0 mg/particle. This configuration has the advantage that the polypropylene-based resin particles have good productivity and the polypropylene-based resin in-mold expanded product has good mechanical properties.

(Shape of resin particles)

The present resin particles are not particularly limited, but are preferably irregularly shaped resin particles. In other words, the shape of the present resin particles is not particularly limited, but is preferably a shape other than a shape (spherical shape and cylindrical shape) generally used in production of expanded particles. For example, the shape is preferably one selected from the group consisting of a star shape, an anchor cross shape, a macaroni shape, a cross shape, an L shape, a Y shape, a T shape, a U shape, and a polygonal shape, and is more preferably a star shape. This configuration has the advantage that it is possible to obtain a polypropylene-based resin in-mold expanded product having excellent sound absorbing performance and a small amount of deformation.

In the present specification, the "shape of the polypropylene-based resin particles" is intended to mean the "shape of a cross section perpendicular to the thickness direction of the polypropylene-based resin particles". In a case where the polypropylene-based resin particles are obtained with use of an extruder, the thickness direction of the polypropylene-based resin particles can also be said to be the extrusion direction of the extruder.

In other words, the shape of the resin particles is preferably a shape which allows the degree of shape irregularity of the expanded particles to be obtained to satisfy a preferable numerical range of the degree of shape irregularity of the expanded particles described later, and is preferably a star shape, for example.

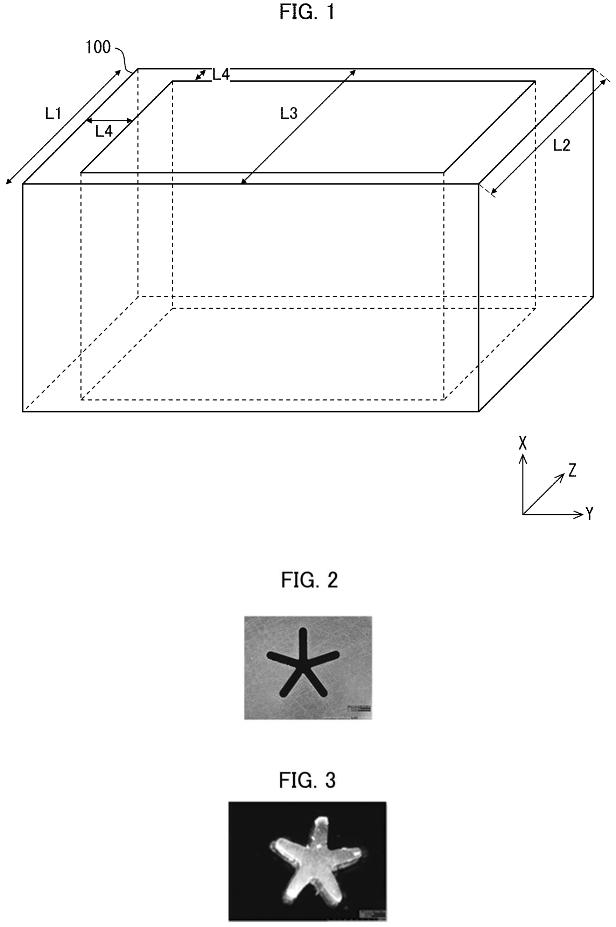

Note, here, that Fig. 2 is a view of a discharge hole whose cross-sectional shape is a star shape, as viewed from the front. Fig. 2 can also be said to be an image obtained by imaging the discharge hole whose cross-sectional shape is a star shape, from the front of the discharge hole. Specifically, Fig. 2 is a view of the discharge hole provided to a die for obtaining star-shaped resin particles which are a raw material of star-shaped expanded particles, as viewed from the front of the discharge hole, and illustrates the cross-sectional shape of the discharge hole. In the present specification, the "shape of a cross section of the discharge hole which cross section is perpendicular to the extrusion direction of the extruder" is also referred to as the "cross-sectional shape of the discharge hole". The star-shaped resin particles are resin particles obtained by being extruded from the die illustrated in Fig. 2. Fig. 3 is a view of a star-shaped polypropylene-based resin particle, as viewed from a certain direction. Fig. 3 can also be said to be an image obtained by imaging the star-shaped polypropylene-based resin particle from the certain direction. The star-shaped resin particles are resin particles having the shape illustrated in Fig. 3.

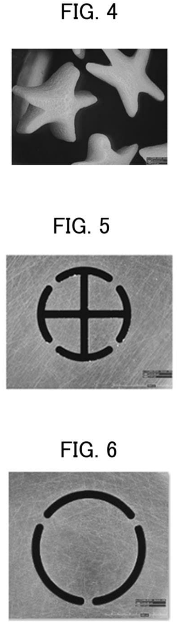

Fig. 5 is a view of a discharge hole whose cross-sectional shape differs from that of the discharge hole illustrated in Fig. 2 and whose cross-sectional shape is an anchor cross shape, as viewed from the front. Fig. 5 can also be said to be an image obtained by imaging the discharge hole whose cross-sectional shape is an anchor cross shape, from the front of the discharge hole. Specifically, Fig. 5 is a view of the discharge hole provided to a die for obtaining anchor cross-shaped resin particles which are a raw material of anchor cross-shaped expanded particles, as viewed from the front of the discharge hole, and illustrates the cross-sectional shape of the discharge hole. The anchor cross-shaped resin particles are resin particles obtained by being extruded from the die illustrated in Fig. 5.

In the present specification, the macaroni shape is intended to mean a cylindrical shape in which a hollow hole is formed. Fig. 6 is a view of a discharge hole whose cross-sectional shape differs from those of the discharge holes illustrated in Figs. 2 and 5, as viewed from the front. Fig. 6 can also be said to be an image obtained by imaging the discharge hole whose cross-sectional shape differs from those of the discharge holes illustrated in Figs. 2 and 5, from the front of the discharge hole. Specifically, Fig. 6 is a view of the discharge hole provided to a die for obtaining macaroni-shaped resin particles which are a raw material of macaroni-shaped expanded particles, as viewed from the front of the discharge hole, and illustrates the cross-sectional shape of the discharge hole. The macaroni-shaped resin particles are resin particles obtained by being extruded from the die illustrated in Fig. 6.

The polypropylene-based resin particles in accordance with an embodiment of the present invention may be resin particles in each of which a hollow hole is formed, or may be resin particles in each of which no hollow hole is formed.

[3. Polypropylene-based resin expanded particles]

Polypropylene-based resin expanded particles in accordance with an embodiment of the present invention are expanded particles obtained by expanding the polypropylene-based resin particles described in the section [2. Polypropylene-based resin particles]. That is, the polypropylene-based resin expanded particles in accordance with an embodiment of the present invention includes the component (e.g., polypropylene-based resin) included in the polypropylene-based resin particles.

<Physical properties of polypropylene-based resin expanded particles>

(Bulk density of expanded particles)

The bulk density of the present expanded particles is preferably 10.0 g/L to 300.0 g/L, more preferably 12.0 g/L to 100.0 g/L, even more preferably 14.0 g/L to 60.0 g/L, still more preferably 15.0 g/L to 50.0 g/L, and particularly preferably 16.0 g/L to 40.0 g/L. This configuration has the advantage that the expanded particles having small variations in expansion rate and having good moldability are obtained. A method for measuring the bulk density of the expanded particles will be detailed in Examples described later.

(Degree of shape irregularity of expanded particles)

The degree of shape irregularity of the polypropylene-based resin expanded particles is preferably not less than 2.20, the degree of shape irregularity being represented by the following formula:

the degree of shape irregularity = the true density of the polypropylene-based resin expanded particles / the bulk density of the polypropylene-based resin expanded particles.

In the present specification, the degree of shape irregularity is an indicator of the bulkiness of expanded particles. Surprisingly, the inventor of the present invention newly found that an in-mold expanded product obtained from expanded particles having a degree of shape irregularity of not less than 2.20 has the advantage of having excellent sound absorbing performance and a small amount of deformation.

The degree of shape irregularity of the present expanded particles is preferably not less than 2.20, more preferably not less than 2.40, and even more preferably not less than 2.50. This configuration has the advantage that it is possible to obtain a polypropylene-based resin in-mold expanded product having excellent sound absorbing performance and a small amount of deformation.

The upper limit of the degree of shape irregularity of the present expanded particles is not particularly limited, but is preferably not more than 3.00, more preferably not more than 2.90, even more preferably not more than 2.80, and particularly preferably not more than 2.70. This configuration has the advantage that an in-mold expanded product having high dynamic properties is obtained. A method for measuring the degree of shape irregularity of the expanded particles will be detailed in Examples described later.

The shape of the present expanded particles which satisfies the above preferable numerical range of the degree of shape irregularity is a shape other than a shape (spherical shape and cylindrical shape) generally used in production of expanded particles. The "shape other than a spherical shape and a cylindrical shape" may be referred to as an "irregular shape". That is, the present expanded particles are preferably irregularly shaped expanded particles. For example, the shape of the present expanded particles is preferably one selected from the group consisting of a star shape, an anchor cross shape, a macaroni shape, a cross shape, an L shape, a Y shape, a T shape, a U shape, and a polygonal shape, and is more preferably a star shape. This configuration has the advantage that it is possible to obtain a polypropylene-based resin in-mold expanded product having excellent sound absorbing performance and a small amount of deformation.

The shape of the expanded particles is identical or substantially identical to the shape of the resin particles. In a case where the resin particles are irregularly shaped resin particles, the expanded particles obtained by expanding the resin particles are irregularly shaped expanded particles. Specifically, for example, in a case where the resin particles have a star shape, the expanded particles obtained by expanding the resin particles also have a star shape. Note, here, that Fig. 4 is an image of star-shaped polypropylene-based resin expanded particles.

The polypropylene-based expanded particles in accordance with an embodiment of the present invention may be expanded particles in each of which a hollow hole is formed, or may be expanded particles in each of which no hollow hole is formed.

<Method for producing polypropylene-based resin expanded particles>

A method for producing the present expanded particles is not particularly limited, and a known method can be employed, as appropriate. An aspect of the method for producing the present expanded particles is detailed below. For matters other than those detailed below, the foregoing descriptions (e.g., the descriptions in the section <Additive>) apply as appropriate. The method for producing the present expanded particles is not limited to the following production method.

(Granulating step)

When the present expanded particles are produced, a step of producing the polypropylene-based resin particles (granulating step) can be carried out.

The granulating step is not particularly limited, provided that the resin particles can be obtained. A known method can be employed as the granulating step. Examples of the granulating step include a method in which the following (S1) through (S3) are sequentially carried out: (S1) a given amount of the polypropylene-based resin and, as necessary, an additive are melted and kneaded with use of an extruder to prepare a melted and kneaded product; (S2) the melted and kneaded product is extruded from a die provided to the extruder; and (S3) the melted and kneaded product thus extruded is chopped into a desired length to obtain the polypropylene-based resin particles.

In the (S1), the given amount of the polypropylene-based resin and, as necessary, the additive may be blended in advance to prepare a blended product. The blended product may be supplied to the extruder and then melted and kneaded to prepare the melted and kneaded product.

In the (S2), the shape of the die may be selected in accordance with a shape desired for the expanded particles. Note, here, that the shape of the die is identical or substantially identical to the shape desired for the expanded particles. For example, in a case where the resin particles obtained by extruding a resin composition with use of a die illustrated in Fig. 6 are used, it is possible to obtain macaroni-shaped expanded particles.

In the (S3), the melted and kneaded product which has been extruded may be cooled and solidified with use of a cooling medium such as water, before the melted and kneaded product is chopped.

(Dispersing step)

Next, when the present expanded particles are produced, a step of dispersing the polypropylene-based resin particles and a blowing agent in an aqueous dispersion medium in a vessel (dispersing step) can be carried out.

Examples of the vessel include a pressure-resistant vessel and an autoclave-type pressure-resistant vessel. The vessel may be provided with a stirrer therein.

Examples of the aqueous dispersion medium include (a) dispersion media obtained by adding methanol, ethanol, ethylene glycol, glycerin, and the like to water, (b) water such as ultrapure water, pure water, tap water, and industrial water, and (c) a solution (aqueous solution) containing a salt such as sodium chloride or sodium sulfate.

Examples of the blowing agent include: (a) inorganic blowing agents such as (a-1) inorganic gases such as nitrogen, carbon dioxide, and air (mixture of oxygen, nitrogen, and carbon dioxide) and (a-2) water; and (b) organic blowing agents such as (b-1) saturated hydrocarbons having 3 to 5 carbon atoms such as propane, normal butane, isobutane, normal pentane, isopentane, and neopentane, (b-2) ethers such as dimethyl ether, diethyl ether, and methyl ethyl ether, and (b-3) halogenated hydrocarbons such as monochloromethane, chloroethane, and hydrofluoroolefin.

In the method for producing the present expanded particles, it is preferable to use a dispersion agent (e.g., an inorganic substance such as tricalcium phosphate, kaolin, and talc) and a dispersion auxiliary agent (e.g., an anionic surfactant such as sodium dodecylbenzenesulfonate). This configuration makes it possible to reduce agglomeration (hereinafter may be referred to as blocking) of the resin particles and to increase the stability of a dispersion slurry in the vessel. As a result, the configuration has the advantage that it is possible to stably produce the expanded particles.

As each of the aqueous dispersion medium and the blowing agent, one of the above examples may be used alone, or two or more of the above examples may be used in combination.

The amount of each of the aqueous dispersion medium, the blowing agent, the dispersion agent, and the dispersion auxiliary agent is not particularly limited, and can be set, as appropriate, in consideration of (i) the stability of the dispersion slurry (dispersibility of the resin particles), (ii) the density of the expanded particles to be obtained, (iii) the fusibility of an in-mold expanded product to be obtained by molding the expanded particles to be obtained, (iv) productivity, (v) economy, and the like.

In the method for producing the present expanded particles, it is preferable to use a pH regulator (e.g., citric acid, malic acid, succinic acid, tartaric acid, oxalic acid, and the like). This configuration has the advantage that it is possible to prevent corrosion of a facility.

The amount of the pH regulator is not particularly limited, but is preferably 0.001 parts by weight to 1.00 part by weight, more preferably 0.003 parts by weight to 0.50 parts by weight, and even more preferably 0.005 parts by weight to 0.30 parts by weight, with respect to 100 parts by weight of the polypropylene-based resin particles. This configuration has the advantage that it is possible to increase the productivity of the expanded particles and prevent corrosion of a facility.

A method for dispersing the polypropylene-based resin particles and the blowing agent in the aqueous dispersion medium in the vessel, i.e., a specific method of the dispersing step is not particularly limited. Examples of the method include a method in which the aqueous dispersion medium, the polypropylene-based resin particles, and the blowing agent are supplied in the vessel and a mixture in the vessel is stirred with use of a stirrer provided in the vessel.

(Temperature increasing and pressure increasing step and maintaining step)

The method for producing the present expanded particles preferably further includes, after the dispersing step and before a releasing step, (1) a temperature increasing and pressure increasing step of increasing a temperature in the vessel to a certain temperature and increasing a pressure in the vessel to a certain pressure and (2) a maintaining step of maintaining the temperature and the pressure in the vessel at the certain temperature and the certain pressure, respectively, the method including the temperature increasing and pressure increasing step and the maintaining step in this order. In the present specification, (a) the certain temperature in the temperature increasing and pressure increasing step and the maintaining step may be referred to as an expansion temperature, and (b) the certain pressure in the temperature increasing and pressure increasing step and the maintaining step may be referred to as an expansion pressure.

The expansion temperature is (i) preferably 20.0°C below to 20.0°C above the melting point of (a) a mixture containing the polypropylene-based resin and, as necessary, the additive, (b) the melted and kneaded product, or (c) the resin particles, (ii) more preferably 10.0°C below to 15.0°C above the melting point of (a) the mixture containing the polypropylene-based resin and, as necessary, the additive, (b) the melted and kneaded product, or (c) the resin particles, and (iii) even more preferably 5.0°C below to 13.0°C above the melting point of (a) the mixture containing the polypropylene-based resin and, as necessary, the additive, (b) the melted and kneaded product, or (c) the resin particles.

Specifically, the expansion temperature is preferably 130.0°C to 170.0°C, more preferably 135.0°C to 165.0°C, even more preferably 138.0°C to 162.0°C, and particularly preferably 140.0°C to 160.0°C. This configuration has the advantage that the expanded particles having good expandability and good moldability are easily obtained.

The expansion pressure is preferably 0.5 MPa (gauge pressure) to 10.0 MPa (gauge pressure), more preferably 0.6 MPa (gauge pressure) to 5.0 MPa (gauge pressure), and more preferably 0.6 MPa (gauge pressure) to 3.5 MPa (gauge pressure). In a case where the expansion pressure is not less than 0.5 MPa (gauge pressure), it is possible to obtain the expanded particles having a suitable density.

In the maintaining step, a period of time (maintaining time) for which the dispersion slurry in the vessel is maintained at or around the expansion temperature and the expansion pressure is not particularly limited, but is, for example, preferably 10 minutes to 60 minutes, more preferably 12 minutes to 50 minutes, and even more preferably 15 minutes to 40 minutes.

(Releasing step)

When the present expanded particles are produced, a step of releasing, into an area having a pressure lower than the pressure in the vessel, the dispersion slurry obtained in the dispersing step (releasing step) can be carried out.

The releasing step makes it possible to expand the resin particles, and as a result, the expanded particles are obtained. The releasing step can also be said to be a step of opening one end of the vessel and releasing the dispersion slurry in the vessel into an area (space) having a pressure lower than the expansion pressure (i.e., the pressure in the vessel).

In the releasing step, the "area having a pressure lower than the expansion pressure" is intended to mean an "area under a pressure lower than the expansion pressure" or a "space under a pressure lower than the expansion pressure", and can also be described as "in an atmosphere having a pressure lower than the expansion pressure". The area having a pressure lower than the expansion pressure may be, for example, an area under atmospheric pressure.

(Expansion process)

The steps from the dispersing step to the releasing step may be referred to as an expansion process. A process of producing the expanded particles from the resin particles in this manner will be referred to as a "first-step expansion process", and the expanded particles thus obtained will be referred to as "first-step expanded particles".

(Second-step expansion process)

In order to obtain the expanded particles having a high expansion rate, the first-step expanded particles obtained in the first-step expansion process may be expanded again. A step of increasing the expansion rate of the first-step expanded particles is referred to as a "second-step expansion process", and the polypropylene-based resin expanded particles obtained through the second-step expansion process are referred to as "second-step expanded particles". A specific method of the second-step expansion process is not particularly limited, and a known method can be employed.

[4. Polypropylene-based resin in-mold expanded product]

A polypropylene-based resin in-mold expanded product in accordance with an embodiment of the present invention is preferably an in-mold expanded product obtained by a production method described in the section [5. Method for producing polypropylene-based resin in-mold expanded product] below. This configuration has the advantage that it is possible to obtain the polypropylene-based resin in-mold expanded product having excellent sound absorbing performance and a small amount of deformation.

The polypropylene-based resin in-mold expanded product in accordance with an embodiment of the present invention is not particularly limited, but is preferably a polypropylene-based resin in-mold expanded product having a water content of 140% to 300%, the water content being calculated by the following formula (1) with use of (i) the weight (wet weight) of the polypropylene-based resin in-mold expanded product which weight is measured after the polypropylene-based resin in-mold expanded product is molded and then left to stand at room temperature for 1 hour and (ii) the weight (dry weight) of the polypropylene-based resin in-mold expanded product which weight is measured after the polypropylene-based resin in-mold expanded product is further dried at 75°C for 12 hours and then left to stand at room temperature for 4 hours:

the water content (%) = {(wet weight - dry weight) / dry          (1).

This configuration has the advantage that it is possible to obtain the polypropylene-based resin in-mold expanded product having excellent sound absorbing performance and a small amount of deformation.

<Physical properties of polypropylene-based resin in-mold expanded product>

(Water content of in-mold expanded product)

The water content of the present in-mold expanded product is 140% to 300%, preferably 150% to 295%, more preferably 180% to 290%, more preferably 200% to 285%, even more preferably 250% to 280%, and particularly preferably 270% to 280%. This configuration has the advantage that it is possible to obtain the polypropylene-based resin in-mold expanded product having a small amount of deformation.

A method for measuring the water content of the polypropylene-based resin in-mold expanded product is as follows: as described above, the water content is calculated by the following formula (1) with use of (i) the weight (wet weight; $Ww$) of the polypropylene-based resin in-mold expanded product which weight is measured after the polypropylene-based resin in-mold expanded product is molded and then left to stand at room temperature for 1 hour and (ii) the weight (dry weight; $Wd$) of the polypropylene-based resin in-mold expanded product which weight is measured after the polypropylene-based resin in-mold expanded product is further dried at 75°C for 24 hours and then left to stand at room temperature for 4 hours:

$$\text{the water content (\%)} = \{(Ww - Wd)/Wd\} \times 100 \ldots (1).$$

The expression "after the polypropylene-based resin in-mold expanded product is molded" is intended to mean at or after a point in time at which the in-mold expanded product is taken out from a mold. The expression "after the polypropylene-based resin in-mold expanded product is left to stand for 1 hour" is intended to mean from a point in time at which 1 hour has elapsed to a point in time at which 1.5 hours have elapsed. The expression "after the polypropylene-based resin in-mold expanded product is left to stand for 4 hours" is intended to mean from a point in time at which 4 hours have elapsed to a point in time at which 4.5 hours have elapsed.

(Porosity of in-mold expanded product)

The porosity of the present in-mold expanded product is not less than 25%, preferably not less than 27%, more preferably not less than 28%, and even more preferably not less than 30%. This configuration has the advantage that it is possible to obtain the polypropylene-based resin in-mold expanded product having excellent sound absorbing performance.

The porosity of the present in-mold expanded product is preferably not more than 60%, more preferably not more than 55%, even more preferably not more than 50%, and particularly preferably not more than 45%. This configuration has the advantage that it is possible to obtain the polypropylene-based resin in-mold expanded product having excellent mechanical strength. Note that a method for measuring the porosity of the polypropylene-based resin in-mold expanded product will be detailed in Examples described later. As the porosity, employed is a value measured after the in-mold expanded product which has been molded and then left to stand at room temperature for 1 hour is cured and dried in a thermostatic chamber at 75°C for 24 hours and then left to stand again at room temperature for 4 hours.

(Maximum sound absorbing coefficient of in-mold expanded product)

The maximum sound absorbing coefficient of the present in-mold expanded product is preferably not less than 0.85, more preferably not less than 0.90, even more preferably not less than 0.96, and particularly preferably not less than 0.97. In this configuration, the in-mold expanded product can be said to have excellent sound absorbing performance. The upper limit of the maximum sound absorbing coefficient of the present in-mold expanded product is not particularly limited, and is, for example, not more than 1.00. Note that a method for measuring the maximum sound absorbing coefficient of the polypropylene-based resin in-mold expanded product will be detailed in Examples described later.

(Amount of deformation of in-mold expanded product)

The amount of deformation of the present in-mold expanded product is preferably not more than 2.5 mm, more preferably not more than 2.0 mm, more preferably not more than 1.5 mm, even more preferably not more than 1.0 mm, and particularly preferably not more than 0.5 mm. In this configuration, the in-mold expanded product can be said to have a small amount of deformation. The lower limit of the amount of deformation of the present in-mold expanded product is not particularly limited, and is, for example, 0.0 mm, which, in other words, means that there is not deformation. Note that a method for measuring the amount of deformation of the polypropylene-based resin in-mold expanded product will be detailed in Examples described later.

[5. Method for producing polypropylene-based resin in-mold expanded product]

A method for producing a polypropylene-based resin in-mold expanded product in accordance with an embodiment of the present invention is a method for producing a polypropylene-based resin in-mold expanded product, the method including: a heating step of heating, in a mold, polypropylene-based resin expanded particles to which an internal pressure is not applied; and a water cooling step of water-cooling a pre-polypropylene-based resin in-mold expanded product obtained in the heating step, by spraying water on the pre-polypropylene-based resin in-mold expanded product or both the pre-polypropylene-based resin in-mold expanded product and the mold for not shorter than 1 second, wherein a porosity of the polypropylene-based resin in-mold expanded product is not less than 25%.

The present production method having this configuration has the advantage that a polypropylene-based resin in-mold expanded product having excellent sound absorbing performance and a small amount of deformation is obtained.

In the present specification, the sound absorbing performance of a polypropylene-based resin in-mold expanded product is evaluated by the maximum sound absorbing coefficient of the polypropylene-based resin in-mold expanded product. That is, in the present specification, the expression that a polypropylene-based resin in-mold expanded product "has excellent sound absorbing performance" means that the maximum sound absorbing coefficient of the polypropylene-based resin in-mold expanded product is high.

The production method described in the section [5. Method for producing polypropylene-based resin in-mold expanded product] is a method for producing the in-mold expanded product described in the section [4. Polypropylene-based resin in-mold expanded product], and the in-mold expanded product described in the section [4. Polypropylene-based resin in-mold expanded product] is preferably an in-mold expanded product obtained by the production method described in the section [5. Method for producing polypropylene-based resin in-mold expanded product].

The present production method preferably includes a step of subjecting the polypropylene-based resin expanded particles described in the section [3. Polypropylene-based resin expanded particles] to in-mold expansion molding.

In the present production method, the polypropylene-based resin expanded particles are preferably irregularly shaped expanded particles. This configuration has the advantage that a polypropylene-based resin in-mold expanded product having excellent sound absorbing performance and a small amount of deformation is obtained.

In the present production method, a mold is used. In the present production method, for example, a mold constituted by a stationary mold that cannot be driven and a movable mold that can be driven is preferably used. Note, here, that the stationary mold and the movable mold can be configured such that a molding space can be formed inside the stationary mold and the movable mold by driving the movable mold toward the stationary mold (this operation may be referred to as "mold closing").

The present production method may include, before the heating step, a filling step of filling the molding space of the mold with the polypropylene-based resin expanded particles to which an internal pressure is not applied. Examples of the filling step include a configuration that sequentially includes the following (b1) though (b4), but the filling step is not limited to the configuration:

(b1) the mold constituted by the stationary mold that cannot be driven and the movable mold that can be driven is mounted on an in-mold expansion molding machine;

(b2) the movable mold is driven toward the stationary mold such that the stationary mold and the movable mold are not completely closed together and a slight gap (also referred to as "gap in a mold") is formed;

(b3) a molding space formed inside the stationary mold and the movable mold is filled with, through, for example, a filling machine, the expanded particles to which an internal pressure is not applied; and

(b4) the movable mold is driven such that the stationary mold and the movable mold are completely closed (i.e., complete mold closing is performed).

The polypropylene-based resin expanded particles to which an internal pressure is not applied can be said to be polypropylene-based resin expanded particles having an internal pressure of 0.1 MPa (absolute pressure). That is, in the filling step, the molding space is filled with the expanded particles having an internal pressure of 0.1 MPa (absolute pressure).

(Heating step)

The method for producing a polypropylene-based in-mold expanded product in accordance with an embodiment of the present invention includes the heating step of heating, in the mold, the polypropylene-based resin expanded particles to which an internal pressure is not applied. The heating step can also be said to be, for example, a step of heating the expanded particles with which the molding space of the mold has been filled in the filling step and to which an internal pressure is not applied. By heating the expanded particles in the mold (in the molding space of the mold) in the heating step, it is possible to fuse the expanded particles together in the mold, and, as a result, it is possible to obtain an in-mold expanded product.

In the present specification, an in-mold expanded product which is obtained after the heating step, which is present in the mold, and which has not been water-cooled or is being water-cooled may be referred to as a "pre-polypropylene-based resin in-mold expanded product", for convenience, in order to distinguish such an in-mold expanded product from an ultimately obtained polypropylene-based resin in-mold expanded product.

In the heating step, the polypropylene-based resin expanded particles obtained by the releasing step are heated without applying an internal pressure to the polypropylene-based resin expanded particles. In other words, it can be said that, in the heating step, the polypropylene-based resin expanded particles having an internal pressure of 0.1 MPa (absolute pressure) is heated. This configuration has the advantage that it is possible to obtain a polypropylene-based resin in-mold expanded product having excellent sound absorbing performance.

In the heating step, the temperature of steam is not particularly limited, but is preferably 143°C to 170°C, more preferably 145°C to 168°C, even more preferably 147°C to 165°C, and particularly preferably 148°C to 162°C. This configuration has the advantage that a polypropylene-based resin in-mold expanded product which is fused well is obtained.

In the heating step, the pressure of the steam is not particularly limited, but is preferably 0.30 MPa (gauge pressure) to 0.70 MPa (gauge pressure), more preferably 0.32 MPa (gauge pressure) to 0.65 MPa (gauge pressure), even more preferably 0.34 MPa (gauge pressure) to 0.60 MPa (gauge pressure), and particularly preferably 0.35 MPa (gauge pressure) to 0.55 MPa (gauge pressure). This configuration has the advantage that a polypropylene-based resin in-mold expanded product which is fused well is obtained.

(Water cooling step)

The present production method includes the water cooling step of water-cooling the pre-polypropylene-based resin in-mold expanded product obtained in the heating step, by spraying water on the pre-polypropylene-based resin in-mold expanded product or both the pre-polypropylene-based resin in-mold expanded product and the mold for not shorter than 1 second. By the water cooling step, it is possible to obtain a polypropylene-based resin in-mold expanded product. Moreover, carrying out the water cooling step having the above-described configuration has the advantage that it is possible to obtain a polypropylene-based resin in-mold expanded product having a small amount of deformation.

The temperature of the water is preferably 10°C to 70°C, more preferably 12°C to 65°C, even more preferably 14°C to 60°C, and particularly preferably 15°C to 55°C. This configuration has the advantage that a polypropylene-based resin in-mold expanded product has good productivity and it is possible to reduce the cost of the steam used for molding.

The pressure at which the water is sprayed is preferably 0.3 MPa (gauge pressure) to 0.7 MPa (gauge pressure), more preferably 0.4 MPa (gauge pressure) to 0.65 MPa (gauge pressure), even more preferably 0.4 MPa (gauge pressure) to 0.6 MPa (gauge pressure), and particularly preferably 0.4 MPa (gauge pressure) to 0.55 MPa (gauge pressure). This configuration has the advantage that it is possible to effectively spray the water (cooling water) on both the pre-polypropylene-based resin in-mold expanded product and the mold or on the pre-polypropylene-based resin in-mold expanded product.

A period of time for which the water is sprayed (may be referred to as a "water cooling time" in the present specification) is not shorter than 1 second, preferably 1 second to 90 seconds, more preferably 3 seconds to 60 seconds, even more preferably 5 seconds to 50 seconds, and particularly preferably 10 seconds to 45 seconds. This configuration has the advantage that it is possible to obtain a polypropylene-based resin in-mold expanded product having a small amount of deformation.

In a case where the water is sprayed on the prepolypropylene-based resin in-mold expanded product, a method in which the water is sprayed directly on the in-mold expanded product is, for example, employed.

In a case where the water is sprayed on both the pre-polypropylene-based resin in-mold expanded product and the mold, a method for spraying the water is not particularly limited, and examples thereof include a method in which the water is sprayed directly on the mold in which a hole is formed. Directly spraying the water on the mold in which the hole is formed results in the water being sprayed also on the pre-polypropylene-based resin in-mold expanded product in the mold through the hole. In a case where the water sprayed on the mold is also sprayed on the pre-polypropylene-based resin in-mold expanded product in the mold as a result in this manner, such a case is regarded as "spraying the water on both the pre-polypropylene-based resin in-mold expanded product and the mold".

As described above, spraying the water directly on the pre-polypropylene-based resin in-mold expanded product or both the pre-polypropylene-based resin in-mold expanded product and the mold in the water cooling step has the advantage that it is possible to efficiently cool the pre-polypropylene-based resin in-mold expanded product.

(Ejecting and drying step)

The present production method may include an ejecting and drying step of obtaining the in-mold expanded product by taking out the in-mold expanded product from the mold and drying the in-mold expanded product.

A method for ejecting the in-mold expanded product from the mold is not particularly limited, and examples thereof include a method in which air is used and a method in which an ejecting tool is used.

A drying temperature is not particularly limited, but is preferably 70°C to 85°C, more preferably 75°C to 83°C, even more preferably 75°C to 81°C, and particularly preferably 75°C to 80°C. This configuration has the advantage that it is possible to obtain a polypropylene-based resin in-mold expanded product having a low water content, with a small amount of energy consumed.

A drying time is not particularly limited, but is preferably 10 hours to 24 hours, more preferably 12 hours to 24 hours, even more preferably 14 hours to 24 hours, and particularly preferably 16 hours to 24 hours. This configuration has the advantage that it is possible to obtain a polypropylene-based resin in-mold expanded product having a low water content, with a small amount of energy consumed.

In a case where the in-mold expanded product is dried, the in-mold expanded product may be left to cool at room temperature for 1 hour, dried at 75°C for 24 hours, and then left to cool at room temperature for 4 hours. Note that, in the present specification, room temperature is intended to mean 20°C to 25°C.

An embodiment of the present invention may be configured as follows.

<1> A method for producing a polypropylene-based resin in-mold expanded product, the method including: a heating step of heating, in a mold, polypropylene-based resin expanded particles to which an internal pressure is not applied; and a water cooling step of water-cooling a pre-polypropylene-based resin in-mold expanded product obtained in the heating step, by spraying water on the pre-polypropylene-based resin in-mold expanded product or both the pre-polypropylene-based resin in-mold expanded product and the mold for not shorter than 1 second, wherein a porosity of the polypropylene-based resin in-mold expanded product is not less than 25%.

<2> The method as described in <1>, wherein a degree of shape irregularity of the polypropylene-based resin expanded particles is not less than 2.20, the degree of shape irregularity being represented by the following formula:

the degree of shape irregularity = a true density of the polypropylene-based resin expanded particles / a bulk density of the polypropylene-based resin expanded particles.

<3> The method as described in <1> or <2>, wherein the polypropylene-based resin expanded particles are irregularly shaped expanded particles.

<4> The method as described in any one of <1> through <3>, wherein a bulk density of the polypropylene-based resin expanded particles is 10.0 g/L to 300.0 g/L.

<5> The method as described in any one of <1> through <4>, wherein a pressure at which the water is sprayed is 0.3 MPa (gauge pressure) to 0.7 MPa (gauge pressure).

<6> The method as described in any one of <1> through <5>, wherein a temperature of the water is 10°C to 70°C.

<7> The method as described in <2>, wherein the degree of shape irregularity of the polypropylene-based resin expanded particles is not more than 3.00:

the degree of shape irregularity = the true density of the polypropylene-based resin expanded particles / the bulk density of the polypropylene-based resin expanded particles.

<8> The method as described in any one of <1> through <7>, wherein the polypropylene-based resin expanded particles are obtained by expanding polypropylene-based resin particles which include a polypropylene-based resin.

<9> The method as described in any one of <1> through <8>, wherein a melt index of the polypropylene-based resin is 3.0 g/10 minutes to 30.0 g/10 minutes at 230°C.

<10> The method as described in any one of <1> through <9>, wherein a melting point of the polypropylene-based resin is 135°C to 160°C.

<11> The method as described in any one of <1> through <10>, wherein the polypropylene-based resin includes at least one selected from the group consisting of (i) a homopolymer of propylene, (ii) a block copolymer of propylene and a monomer other than propylene, and (iii) a random copolymer of propylene and a monomer other than propylene.

<12> The method as described in any one of <1> through <11>, wherein a resin component included in the polypropylene-based resin particles includes at least one selected from the group consisting of an ethylene/propylene random copolymer and a 1-butene/ethylene/propylene random copolymer in a total amount of not less than 50% by weight, with respect to 100% by weight of the resin component.

<13> The method as described in any one of <1> through <12>, wherein a weight per particle of the polypropylene-based resin particles is 0.50 mg/particle to 6.0 mg/particle.

<14> The method as described in any one of <1> through <13>, wherein a shape of the polypropylene-based resin particles is one selected from the group consisting of a star shape, an anchor cross shape, a macaroni shape, a cross shape, an L shape, a Y shape, a T shape, a U shape, and a polygonal shape.

<15> The method as described in any one of <1> through <14>, wherein a water content of the polypropylene-based resin in-mold expanded product is 140% to 300%,

the water content being calculated by formula (1) below with use of (i) a weight (Ww) of the polypropylene-based resin in-mold expanded product which weight is measured after the polypropylene-based resin in-mold expanded product is molded and then left to stand at room temperature for 1 hour and (ii) a weight (Wd) of the polypropylene-based resin in-mold expanded product which weight is measured after the polypropylene-based resin in-mold expanded product is further dried at 75°C for 12 hours and then left to stand at room temperature for 4 hours:

$$\text{the water content (\%)} = \{(Ww-Wd)/Wd\} \times 100 \ ... \ (1).$$

<16> The method as described in any one of <1> through <15>, wherein the porosity of the polypropylene-based resin in-mold expanded product is not more than 60%.

<17> The method as described in any one of <1> through <16>, wherein a maximum sound absorbing coefficient of the polypropylene-based resin in-mold expanded product is not less than 0.85 but not more than 1.00.

<18> The method as described in any one of <1> through <17>, wherein an amount of deformation of the polypropylene-based resin in-mold expanded product is not less than 0.0 mm but not more than 2.5 mm.

<19> The method as described in any one of <1> through <18>, wherein a period of time for which the water is sprayed is not longer than 90 seconds.

<20> The method as described in any one of <1> through <7>, wherein the polypropylene-based resin expanded particles include a polypropylene-based resin whose melt index is 3.0 g/10 minutes to 30.0 g/10 minutes at 230°C.

Examples

The present invention is described below in more detail with reference to Examples. Note, however, that these Examples do not limit the technical scope of the present invention.

[Materials]

Materials used in Examples and Comparative Examples are shown below.

(Polypropylene-based resin)

· Polypropylene-based resin A: 1-butene/ethylene/propylene random copolymer (propylene unit: 96 mol%, melting point: 149°C, 1-butene content: 3.8% by weight, ethylene content: 0.5% by weight, MI=10.1 g/10 minutes)
· Polypropylene-based resin B: ethylene/propylene random copolymer (propylene unit: 96 mol%, melting point: 144°C, ethylene content: 2.8% by weight, MI=8.4 g/10 minutes) · Polypropylene-based resin C: ethylene/propylene random copolymer (propylene unit: 96 mol%, melting point: 142°C, ethylene content: 3.0% by weight, MI=6.9 g/10 minutes)

(Additives)

· Glycerine: PURIFIED GLYCERIN D (manufactured by Lion Corporation)
· Melamine: melamine (manufactured by Nissan Chemical Corporation)
Talc: Talcan Powder (registered trademark) PK-S (manufactured by Hayashi-Kasei Co., Ltd.)

[Measurement methods]

Measurement methods carried out in Examples and Comparative Examples are described below.

(Melting point of polypropylene-based resin)

As the melting point of a polypropylene-based resin, a value obtained by measurement carried out by a DSC method with use of a differential scanning calorimeter (DSC6200 type, manufactured by Seiko Instruments Inc.) was employed. A specific operational procedure was as in the following (1) through (4): (1) the temperature of 5 mg to 6 mg of the polypropylene-based resin was increased from 40.0°C to 220.0°C at a temperature increase rate of 10.0°C/min so that the polypropylene-based resin was melted; (2) thereafter, the temperature of the melted polypropylene-based resin was decreased from 220.0°C to 40.0°C at a temperature decrease rate of 10.0°C/min so that the polypropylene-based resin was crystallized; (3) thereafter, the temperature of the crystallized polypropylene-based resin was increased from 40.0°C to 220.0°C at a temperature increase rate of 10.0°C/min; and (4) a temperature at a peak (melting peak) in a DSC curve of the polypropylene-based resin which DSC curve was obtained in the second temperature increase (i.e., in (3)) was employed as the melting point of the polypropylene-based resin. Note that, in a case where a plurality of peaks (melting peaks) were present in the DSC curve of the polypropylene-based resin which DSC curve was obtained during the second temperature increase by the above-described method, a temperature at a peak (melting peak) having the greatest melting heat quantity was employed as the melting point of the polypropylene-based resin.

(MI of polypropylene-based resin)

As the MI of the polypropylene-based resin, a value obtained by measurement carried out with use of an MI measurement device described in JIS K7210:1999 under the following conditions was employed: the diameter $\varphi$ of an orifice was $2.0959 \pm 0.005$ mm; the length of the orifice was $8.000 \pm 0.025$ mm; a load was 2.16 kgf; and a temperature was 230°C ($230 \pm 0.2$°C).

(Degree of shape irregularity of expanded particles)

The degree of shape irregularity of expanded particles was calculated by dividing a "true density" measured by a method described below by a "bulk density" measured by a method described below. Specifically, the degree of shape irregularity was measured by the following formula:

the degree of shape irregularity = the true density of the polypropylene-based resin expanded particles / the bulk density of the polypropylene-based resin expanded particles.

(Bulk density of expanded particles)

The bulk density of the expanded particles was measured by a method including the following (1) through (3): (1) the expanded particles were introduced into a vessel having a volume V1 (cm$^3$), until the expanded particles overflowed from the vessel; (2) the top particles (upper surface) in the vessel were leveled off, and the weight W1 (g) of the expanded particles in the vessel was measured; and (3) the bulk density of the expanded particles was calculated by the following formula:

the bulk density (g/L) of the expanded particles = the weight W1 (g) of the expanded particles/{the volume V1 (cm$^3$) of the vessel/1000}.

(True density of expanded particles)

The weight W2 (g) of the polypropylene-based resin expanded particles was accurately weighed to 0.001 g (rounded off to three decimal places). The weighed polypropylene-based resin expanded particles were immersed in 100 mL of water in a graduated cylinder at 23°C. From a scale by which a water surface was elevated at the time of the immersion, the volume V2 (cm$^3$) of the polypropylene-based resin expanded particles was read. The true density of the expanded particles was calculated by the following formula:

the true density (g/L) of the expanded particles = the weight W2(g) of the expanded particles / {the volume V2 (cm$^3$) of the expanded particles /1000}.

(Maximum sound absorbing coefficient of in-mold expanded product)

A sample having a diameter φ of 29 mm and a thickness of 60.0 mm was cut out from a polypropylene-based resin in-mold expanded product (370 mm long × 320 mm wide × 60 mm thick). Both skin surfaces of the sample were cut off so as to adjust the thickness to 40.0 mm. The sample thus obtained was used as a normal incident sound absorbing coefficient measurement sample. This sample was used to measure a normal incident sound absorbing coefficient at 500 Hz to 6400 Hz in accordance with JIS A1405. The normal incident sound absorbing coefficient was measured in a state where the sample and a sound wave reflecting rigid wall were in close contact with each other, i.e., in a state where no air was behind the sample. The normal incident sound absorbing coefficient was measured with use of a normal incident sound absorbing coefficient measuring device SR-4100 manufactured by Ono Sokki Co., Ltd. From an obtained frequency-normal incident sound absorbing coefficient curve, the normal incident sound absorbing coefficient (maximum sound absorbing coefficient) at a frequency at which the normal incident sound absorbing coefficient reached its maximum was read.

In the present specification, the expression that an in-mold expanded product "has excellent sound absorbing performance" is intended to mean that the maximum sound absorbing coefficient of the in-mold expanded product is not less than 0.85.

(Amount of deformation of in-mold expanded product)

A method for evaluating the amount of deformation of the present in-mold expanded product is described below with reference to Fig. 1. Fig. 1 is a schematic view of a polypropylene-based resin in-mold expanded product 100 used to evaluate the amount of deformation. The in-mold expanded product 100 was produced by subjecting expanded particles to in-mold expansion molding with use of a mold for a product storing shock-absorbing box as a mold for evaluating the amount of deformation. As the mold, used was a mold for producing the shock-absorbing box that had a box shape having dimensions of 400 mm in a long direction (Y direction) × 300 mm in a short direction (Z direction) × 145 mm in a thickness direction (X direction) and that had side surfaces having a thickness of 21 mm.

In the present specification, the expression that an in-mold expanded product has a "small amount of deformation" is intended to mean that the amount of deformation of the in-mold expanded product is not more than 2.5 mm.

In Fig. 1, the X direction can also be said to be the thickness direction of the in-mold expanded product 100. The Y direction can also be said to be the long direction of the in-mold expanded product 100, and is a direction perpendicular to the X direction. The Z direction can also be said to be the short direction of the in-mold expanded product 100, and is a direction perpendicular to each of the X and Y directions. As illustrated in Fig. 1, in the in-mold expanded product 100, the short-direction (Z-direction) dimensions (lengths) of two end portions in the long direction (Y direction) were respectively defined as L1 (mm) and L2 (mm), and the short-direction (Z-direction) dimension of a central portion in the long direction (Y direction) was defined as L3 (mm). The dimensions of the thicknesses of the side surfaces (in the short direction (Z direction) and the long direction (Y direction)) were each defined as L4 (mm).

The amount of deformation of the in-mold expanded product was measured by a method including the following (1) through (3): (1) the expanded particles were subjected to in-mold expansion molding with use of the mold which was for dimensions (lengths) of 400 mm in a long direction (Y direction), 300 mm in a short direction (Z direction), and 145 mm in a thickness direction (X direction) and which was for side surfaces having a thickness of 21 mm; (2) the Z-direction dimensions (mm) (L1 and L2) of two end portions in the long direction of an obtained in-mold expanded product (in-mold expanded product 100) and the Z-direction dimension (mm) (L3) of a central portion in the long direction of the obtained in-mold expanded product (in-mold expanded product 100) were measured; and (3) the amount of deformation was calculated in accordance with the following formula:

$$\text{the amount of deformation (mm)} = \{(L1+L2)/2\}-L3.$$

(Water content of in-mold expanded product)

The water content of the polypropylene-based resin in-mold expanded product which was obtained by molding with use of the mold described in the section (Amount of deformation of in-mold expanded product) and which had the above dimensions was measured. The wet weight Ww (g) of the in-mold expanded product which had been molded and then left to stand at room temperature for 1 hour was measured. Next, the in-mold expanded product was cured and dried in a thermostatic chamber at 75°C for 24 hours, and then left to stand again at room temperature for 4 hours. Thereafter, the dry weight Wd (g) of the in-mold expanded product was measured. The water content (%) of the in-mold expanded product was calculated from the following formula (1):

$$\text{the water content (\%)} = \{(Ww-Wd)/Wd\}\times 100 \ldots (1).$$

(Filling property of in-mold expanded product)

Prepared were n=5 polypropylene-based resin in-mold expanded products each of which was obtained by molding with use of the mold described in the section (Amount of deformation of in-mold expanded product) and which had the above dimensions. The outer edges of an opening (the outer edges of extreme ends of side walls, not the outer edges of a bottom surface) of each of the obtained five box-shaped in-mold expanded products were observed. It was checked whether a not shorter than 10 mm long loss(es) of expanded particles was/were present or not. The number of in-mold expanded products having the loss(es) was counted. A filling property was evaluated in accordance with the following criteria.

1 (acceptable): No in-mold expanded product had a not shorter than 10 mm long loss(es)

0 (not acceptable): At least one in-mold expanded product had a not shorter than 10 mm long loss(es).

(Porosity of in-mold expanded product)

For normal incident sound absorbing coefficient measurement, a test piece measuring $\Phi$ 29 mm $\times$ 40 mm was cut out from a polypropylene-based resin in-mold expanded product (370 mm long $\times$ 320 mm wide $\times$ 50 mm thick) produced for porosity measurement. Regarding the test piece, Vc was measured in accordance with the method described in PROCEDURE C of ASTM D2856-87, and a porosity (%) was obtained in accordance with the following formula:

$$\text{the porosity (\%)} = \{(Va-Vc)\times 100\}/Va.$$

Note, here, that the volume Vc $(cm^3)$ is the volume of the test piece ($\Phi$ 29 mm $\times$ 40 mm) which volume was obtained by measurement carried out with use of an air comparison pycnometer model 1000 manufactured by Tokyo Science Corporation. Note also that the volume Va $(cm^3)$ is apparent volume obtained by (i) measuring, with use of a caliper, the diameter D (cm) and the height H (cm) of the test piece ($\Phi$ 29 mm $\times$ 40 mm) whose Vc had been measured by the air comparison pycnometer and (ii) carrying out calculation in accordance with following formula:

$$\text{the volume Va } (cm^3) = \pi D^2 H/4.$$

[Example 1]

(Preparation of polypropylene-based resin particles)

A mixture was obtained by (i) measuring out 100 parts by weight of a polypropylene-based resin, 0.15 parts by weight of glycerin, and 0.05 parts by weight of talc and (ii) dry-blending these materials with use of a small tumbler manufactured by O. N. Machinery Co., Ltd. The mixture was melted and kneaded at a resin temperature of 200°C with use of a twin screw extruder (TEM26-SX, manufactured by Toshiba Machine Co., Ltd.), and extruded from a 5-baseline die attached to an extreme end of the extruder in the form of a strand (product). The extruded product (strand) was water-cooled in a water bath having a length of 2 m. Thereafter, with use of a chopping device [manufactured by Ishinaka Iron Works, Co,. Ltd.], while the water-cooled product was taken up, the water-cooled product was chopped in length (chopping step). As a result of this operation, polypropylene-based resin particles (weight per particle: 2.5 mg) having a shape shown in Table 1 (star shape) were obtained.

(Preparation of polypropylene-based resin expanded particles)

Into a 10-L pressure-resistant vessel, introduced were 100 parts by weight of the obtained polypropylene-based resin particles, 442 parts by weight of water as an aqueous dispersion medium, 0.33 parts by weight of kaolin as a dispersion agent, 0.05 parts by weight of sodium dodecylbenzenesulfonate as a dispersion auxiliary agent, 0.03 parts by weight of citric acid as a pH regulator, and 3.5 parts by weight to 4.5 parts by weight, which was varied depending on an expansion pressure, of carbon dioxide as a blowing agent. In this manner, a dispersion slurry containing the blowing agent was prepared. While the obtained dispersion slurry was stirred, the pressure-resistant vessel was heated to an expansion temperature (temperature in the pressure-resistant vessel) of 151.0°C. After the temperature and a pressure in the pressure-resistant vessel reached a given expansion temperature and a given expansion pressure (temperature increasing and pressure increasing step), the temperature and the pressure in the pressure-resistant vessel were maintained at the given expansion temperature and the given expansion pressure for another 30 minutes (maintaining step). Next, carbon dioxide was introduced, and the pressure in the pressure-resistant vessel was maintained at the expansion pressure of 2.5 MPa (gauge pressure). A valve at the bottom of the pressure-resistant vessel was opened, and the dispersion slurry in the pressure-resistant vessel was released under atmospheric pressure through an orifice having a diameter φ of 4.0 mm, so that polypropylene-based resin expanded particles were obtained (releasing step). The polypropylene-based resin expanded particles were dried at 75°C for 24 hours. The obtained first-step expanded particles exhibited two peaks derived from the polypropylene-based resin, in a DSC curve obtained by measurement carried out by a DSC method. The bulk density of the obtained polypropylene-based resin expanded particles was evaluated. A result is shown in Table 1.

(Preparation of polypropylene-based resin in-mold expanded product)

A mold for a box-shaped molded product was filled with the obtained polypropylene-based resin expanded particles with use of a polyolefin in-mold expansion molding machine (manufactured by Dabo) (filling step). The polypropylene-based resin expanded particles were heated and fused together by steam of 0.28 MPa (gauge pressure) (heating step). Subsequently, water (cooling water) at 30°C was sprayed on the mold at a spraying pressure of 0.4 MPa (gauge pressure) for 5 seconds so that an obtained pre-polypropylene-based resin in-mold expanded product was cooled (water cooling step). Specifically, the water was sprayed directly on the mold from a copper tube through a cooling water nozzle. Since the mold had a hole through which the steam passed, the water was sprayed not only on the mold but also on the pre-polypropylene-based resin in-mold expanded product by spraying the water directly on the mold. That is, in the water cooling step, the water was sprayed on both the pre-polypropylene-based resin in-mold expanded product and the mold for 5 seconds. Thereafter, the mold was opened, and an obtained polypropylene-based resin in-mold expanded product was taken out from the mold with use of air or an ejecting tool (ejecting step). After the obtained in-mold expanded product was left to stand at room temperature for 1 hour, the in-mold expanded product was cured and dried in a thermostatic chamber at 75°C for 24 hours (drying step), and then left to stand again at room temperature for 4 hours. Thereafter, the maximum sound absorbing coefficient, the amount of deformation, the water content, the filling property, and the porosity thereof were measured. Results are shown in Table 1.

[Examples 2 to 8 and Comparative Examples 1 to 3]

Expanded particles and in-mold expanded products were obtained by the same method as that in Example 1, except that the types and the amounts of materials and production conditions were changed as shown in Table 1. The physical properties of the obtained expanded particles and the obtained in-mold expanded products were measured and evaluated. Results are shown in Table 1.

Note that the expression "Air pressure (absolute pressure)" shown in Table 1 is intended to mean the internal pressure of the expanded particles during molding of the expanded particles.

[Table 1]

(Table 1)

| | | | | Example | | | |
|---|---|---|---|---|---|---|---|
| | | | | 1 | 2 | 3 | 4 |
| Resin particles | Polypropylene-based resin | Polypropylene-based resin A | [Parts by weight] | 100 | 100 | 100 | 100 |
| | | Polypropylene-based resin B | [Parts by weight] | - | - | - | - |
| | | Polypropylene-based resin C | [Parts by weight] | - | - | - | - |
| | Additives | Glycerine | [Parts by weight] | 0.15 | 0.15 | 0.15 | 0.15 |
| | | Melamine | [Parts by weight] | - | - | - | - |
| | | Talc | [Parts by weight] | 0.05 | 0.05 | 0.05 | 0.05 |
| | Physical properties | Particle weight | [mg/particle] | 2.5 | 2.5 | 2.5 | 2.5 |
| | | Shape | [-] | Star | Star | Star | Star |

(continued)

|  |  |  |  | Example | | | |
|---|---|---|---|---|---|---|---|
|  |  |  |  | 1 | 2 | 3 | 4 |
| Expanded particles | Physical properties | Bulk density | [g/L] | 22.0 | 22.0 | 22.0 | 22.0 |
|  |  | Degree of shape irregularity | [-] | 2.50 | 2.50 | 2.50 | 2.50 |
| In-mold expanded product | Molding conditions | Air pressure (absolute pressure) | [MPa·Abs] | 0.1 | 0.1 | 0.1 | 0.1 |
|  |  | Water cooling time | [Second] | 5 | 10 | 45 | 60 |
|  | Physical properties | Maximum sound absorbing coefficient | [-] | 0.97 | 0.97 | 0.97 | 0.96 |
|  |  | Amount of deformation | [mm] | 1.5 | 1.0 | 0.5 | 0.5 |
|  |  | Water content | [%] | 178 | 209 | 276 | 280 |
|  |  | Filling property | [-] | 1 | 1 | 1 | 1 |
|  |  | Porosity | [%] | 40 | 40 | 40 | 40 |

(Table 1)

|  |  |  |  | Example | | | |
|---|---|---|---|---|---|---|---|
|  |  |  |  | 5 | 6 | 7 | 8 |
| Resin particles | Polypropylene-based resin | Polypropylene-based resin A | [Parts by weight] | 100 | 100 | 0 | 0 |
|  |  | Polypropylene-based resin B | [Parts by weight] | - | - | 100 | - |
|  |  | Polypropylene-based resin C | [Parts by weight] | - | - | - | 100 |
|  | Additives | Glycerine | [Parts by weight] | 0.15 | - | 0.15 | 0.15 |
|  |  | Melamine | [Parts by weight] | - | 0.35 | - | - |
|  |  | Talc | [Parts by weight] | 0.05 | 0.05 | 0.05 | 0.05 |
|  | Physical properties | Particle weight | [mg/particle] | 3.9 | 1.5 | 2.5 | 2.5 |
|  |  | Shape | [-] | Anchor cross | Macaroni | Star | Star |
| Expanded particles | Physical properties | Bulk density | [g/L] | 25.9 | 22.7 | 21.0 | 23.4 |
|  |  | Degree of shape irregularity | [-] | 2.69 | 2.24 | 2.48 | 2.49 |
| In-mold expanded product | Molding conditions | Air pressure (absolute pressure) | [MPa·Abs] | 0.1 | 0.1 | 0.1 | 0.1 |
|  |  | Water cooling time | [Second] | 10 | 10 | 10 | 10 |
|  | Physical properties | Maximum sound absorbing coefficient | [-] | 0.92 | 0.88 | 0.96 | 0.96 |
|  |  | Amount of deformation | [mm] | 2.0 | 2.0 | 1.5 | 1.5 |
|  |  | Water content | [%] | 203 | 164 | 269 | 173 |
|  |  | Filling property | [-] | 1 | 1 | 1 | 1 |
|  |  | Porosity | [%] | 45 | 30 | 38 | 39 |

[Table 1 (continued)]

(Table 1)

| | | | | Comparative Example | | |
|---|---|---|---|---|---|---|
| | | | | 1 | 2 | 3 |
| Resin particles | Polypropylene-based resin | Polypropylene-based resin A | [Parts by weight] | 100 | 100 | 100 |
| | | Polypropylene-based resin B | [Parts by weight] | - | - | - |
| | | Polypropylene-based resin C | [Parts by weight] | - | - | - |
| | Additives | Glycerine | [Parts by weight] | 0.15 | 0.15 | 0.15 |
| | | Melamine | [Parts by weight] | - | - | - |
| | | Talc | [Parts by weight] | 0.05 | 0.05 | 0.05 |
| | Physical properties | Particle weight | [mg/particle] | 2.5 | 2.5 | 2.5 |
| | | Shape | [-] | Star | Cross | Star |
| Expanded particles | Physical properties | Bulk density | [g/L] | 22.0 | 26.0 | 22.0 |
| | | Degree of shape irregularity | [-] | 2.50 | 2.15 | 2.50 |
| In-mold expanded product | Molding conditions | Air pressure (absolute pressure) | [MPa·Abs] | 0.1 | 0.1 | 0.14 |
| | | Water cooling time | [Second] | 0 | 10 | 5 |
| | Physical properties | Maximum sound absorbing coefficient | [-] | 0.97 | 0.61 | 0.58 |
| | | Amount of deformation | [mm] | 4.0 | 3.0 | 0.0 |
| | | Water content | [%] | 23 | 139 | 120 |
| | | Filling property | [-] | 0 | 1 | 1 |
| | | Porosity | [%] | 40 | 23 | 23 |

Industrial Applicability

The method for producing a polypropylene-based resin in-mold expanded product in accordance with an embodiment of the present invention makes it possible to provide a polypropylene-based resin in-mold expanded product having excellent sound absorbing performance and a small amount of deformation. The polypropylene-based resin in-mold expanded product can be suitably used in various applications such as shock-absorbing packing materials, shipping materials, heat insulating materials, civil engineering and construction materials, and automotive components.

Reference Signs List

100   Polypropylene-based resin in-mold expanded product
X      Thickness direction
Y      Long direction
Z      Short direction

**Claims**

1. A method for producing a polypropylene-based resin in-mold expanded product, the method comprising:

    a heating step of heating, in a mold, polypropylene-based resin expanded particles to which an internal pressure is not applied; and
    a water cooling step of water-cooling a pre-polypropylene-based resin in-mold expanded product obtained in the heating step, by spraying water on the pre-polypropylene-based resin in-mold expanded product or both the pre-polypropylene-based resin in-mold expanded product and the mold for not shorter than 1 second, wherein
    a porosity of the polypropylene-based resin in-mold expanded product is not less than 25%.

2. The method as set forth in claim 1, wherein a degree of shape irregularity of the polypropylene-based resin expanded particles is not less than 2.20, the degree of shape irregularity being represented by the following formula:
    the degree of shape irregularity = a true density of the polypropylene-based resin expanded particles / a bulk density of the polypropylene-based resin expanded particles.

3. The method as set forth in claim 1, wherein the polypropylene-based resin expanded particles are irregularly shaped expanded particles.

4. The method as set forth in claim 1, wherein a bulk density of the polypropylene-based resin expanded particles is 10.0 g/L to 300.0 g/L.

5. The method as set forth in claim 1, wherein a pressure at which the water is sprayed is 0.3 MPa (gauge pressure) to 0.7 MPa (gauge pressure).

6. The method as set forth in claim 1, wherein a temperature of the water is 10°C to 70°C.

7. The method as set forth in claim 1, wherein the polypropylene-based resin expanded particles are obtained by expanding polypropylene-based resin particles which include a polypropylene-based resin.

8. The method as set forth in claim 7, wherein a melt index of the polypropylene-based resin is 3.0 g/10 minutes to 30.0 g/10 minutes at 230°C.

9. The method as set forth in claim 7, wherein a melting point of the polypropylene-based resin is 135°C to 160°C.

10. The method as set forth in claim 7, wherein a resin component included in the polypropylene-based resin particles includes at least one selected from the group consisting of an ethylene/propylene random copolymer and a 1-butene/ethylene/propylene random copolymer in a total amount of not less than 50% by weight, with respect to 100% by weight of the resin component.

11. The method as set forth in claim 7, wherein a weight per particle of the polypropylene-based resin particles is 0.50 mg/particle to 6.0 mg/particle.

12. The method as set forth in claim 1, wherein a water content of the polypropylene-based resin in-mold expanded product is 140% to 300%,
    the water content being calculated by formula (1) below with use of (i) a weight (Ww) of the polypropylene-based resin in-mold expanded product which weight is measured after the polypropylene-based resin in-mold expanded product is molded and then left to stand at room temperature for 1 hour and (ii) a weight (Wd) of the polypropylene-based resin in-mold expanded product which weight is measured after the polypropylene-based resin in-mold expanded product is further dried at 75°C for 12 hours and then left to stand at room temperature for 4 hours:

$$\mathtt{the\ water\ content\ (\%)\ =\ \{(Ww\text{-}Wd)/Wd\}\times 100\ ...\ (1).}$$

13. The method as set forth in claim 1, wherein a maximum sound absorbing coefficient of the polypropylene-based resin in-mold expanded product is not less than 0.85 but not more than 1.00.

14. The method as set forth in any one of claims 7 through 13, wherein an amount of deformation of the polypropylene-

22

based resin in-mold expanded product is not less than 0.0 mm but not more than 2.5 mm.

15. The method as set forth in any one of claims 1 through 6, wherein the polypropylene-based resin expanded particles include a polypropylene-based resin whose melt index is 3.0 g/10 minutes to 30.0 g/10 minutes at 230°C.

FIG. 1

FIG. 2

FIG. 3

FIG. 4

FIG. 5

FIG. 6

## INTERNATIONAL SEARCH REPORT

| International application No. |
|---|
| **PCT/JP2024/012567** |

---

**A. CLASSIFICATION OF SUBJECT MATTER**

*C08J 9/16*(2006.01)i
FI: C08J9/16 CES

According to International Patent Classification (IPC) or to both national classification and IPC

---

**B. FIELDS SEARCHED**

Minimum documentation searched (classification system followed by classification symbols)

C08J9/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

---

**C. DOCUMENTS CONSIDERED TO BE RELEVANT**

| Category* | Citation of document, with indication, where appropriate, of the relevant passages | Relevant to claim No. |
|---|---|---|
| X | WO 2014/084165 A1 (KANEKA CORP.) 05 June 2014 (2014-06-05) | 1, 4-12, 15 |
| | claims, paragraphs [0075], [0091]-[0121], example 13, table 1, fig. 4 | |
| Y | | 2-3, 13-14 |
| Y | WO 2018/147464 A1 (ASAHI KASEI KABUSHIKI KAISHA) 16 August 2018 (2018-08-16) | 2-3, 13-14 |
| | claims, paragraphs [0045]-[0053], [0152], fig. 1-3 | |
| A | | 1, 4-12, 15 |
| X | WO 2019/220994 A1 (KANEKA CORP.) 21 November 2019 (2019-11-21) | 1, 4-12, 15 |
| | claims, paragraphs [0008]-[0010], [0159]-[0210], example 1, tables 1, 2 | |
| Y | | 2-3, 13-14 |
| A | JP 2015-108030 A (KANEKA CORP.) 11 June 2015 (2015-06-11) | 1-15 |
| A | JP 2022-167218 A (JSP CORP.) 04 November 2022 (2022-11-04) | 1-15 |
| A | JP 2006-240286 A (KANEKA CORP.) 14 September 2006 (2006-09-14) | 1-15 |

---

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/012567** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 9-249763 A (SEKISUI PLASTICS CO., LTD.) 22 September 1997 (1997-09-22) | 1-15 |

Form PCT/ISA/210 (second sheet) (July 2022)

**INTERNATIONAL SEARCH REPORT**
Information on patent family members

International application No.

**PCT/JP2024/012567**

| Patent document cited in search report | | | Publication date (day/month/year) | Patent family member(s) | | | Publication date (day/month/year) |
|---|---|---|---|---|---|---|---|
| WO | 2014/084165 | A1 | 05 June 2014 | US 2015/0284526 A1 claims, paragraphs [0134]- [0141], [0164]-[0244], example 13, table 1, fig. 4 EP 2927270 A1 CN 104797643 A | | | |
| WO | 2018/147464 | A1 | 16 August 2018 | US 2020/0032023 A1 claims, paragraphs [0072]- [0080], fig. 1-3 EP 3581613 A1 CN 110139894 A KR 10-2019-0099312 A | | | |
| WO | 2019/220994 | A1 | 21 November 2019 | EP 3795622 A1 claims, paragraphs [0008]- [0010], [0117]-[0174], example 1, table 1, 2 CN 112189032 A | | | |
| JP | 2015-108030 | A | 11 June 2015 | (Family: none) | | | |
| JP | 2022-167218 | A | 04 November 2022 | EP 4079797 A1 | | | |
| JP | 2006-240286 | A | 14 September 2006 | (Family: none) | | | |
| JP | 9-249763 | A | 22 September 1997 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001198940 A
- JP 2007045979 A